# EUROPÄISCHE PATENTSCHRIFT

(11) **EP 1 008 253 B1**
(45) Veröffentlichungstag und Bekanntmachung des Hinweises auf die Patenterteilung: **31.07.2002**
(21) Anmeldenummer: 98936346.0
(22) Anmeldetag: 15.06.1998
(51) Int. Cl.: H04L 25/24, H04L 25/26

(54) **VERFAHREN ZUR KOMPENSATION VON BITDAUERÄNDERUNGEN IN FASEROPTISCHEN SIGNALÜBERTRAGUNGSSYSTEMEN UND RETIMER ZUR DURCHFÜHRUNG DES VERFAHRENS**
METHOD FOR COMPENSATING BIT DURATION CHANGES IN FIBREOPTIC SIGNAL TRANSMISSION SYSTEMS AND RETIMER FOR CARRYING OUT SAID METHOD
DISPOSITIF PERMETTANT DE COMPENSER LES VARIATIONS DE LA DUREE DES BITS DANS DES SYSTEMES DE TRANSMISSION DE SIGNAUX ET RESYNCHRONISEUR DESTINE A L'APPLICATION DE CE PROCEDE

(30) Priorität: 27.08.1997 DE 19737337
(43) Veröffentlichungstag der Anmeldung: 14.06.2000
(73) Patentinhaber: Hirschmann Electronics GmbH & Co. KG, 72654 Neckartenzlingen (DE)
(72) Erfinder: SOMMER, Rolf-Dieter, D-73760 Ostfildern (DE); SCHUSTER, Peter, D-73262 Reichenbach (DE); MEISENBACHER, Robert, D-73276 Notzingen (DE)
(74) Vertreter: Stadler, Heinz, Dipl.-Ing.
(86) Internationale Anmeldenummer: EP9803599
(87) Internationale Veröffentlichungsnummer: WO9911039

(56) Entgegenhaltungen:
- EP-A- 0 554 710
- DE-A- 3 816 973
- KAWAI M ET AL: "SMART OPTICAL RECEIVER WITH AUTOMATIC DECISION THRESHOLD SETTING AND RETIMING PHASE ALIGNMENT" JOURNAL OF LIGHTWAVE TECHNOLOGY, Bd. 7, Nr. 11, 1. November 1989, Seiten 1634-1640, XP000103999

## Beschreibung

Die Erfindung geht aus von einem Verfahren sowie einem Retimer zur Durchführung des Verfahrens nach dem Oberbegriff des Anspruches 1 bzw. 9.
Bei faseroptischen Übertragungssystemen für digitale Signale treten neben einer dämpfungsbedingten Pegelreduzierung als Folge unterschiedlicher Schaltzeiten der elektro/optischen und opto/elektrischen Wandler (E/O- und O/E-Wandler) beim Umschalten von Hell nach Dunkel bzw. umgekehrt auch Änderungen der Bitdauer auf, die zum Wegfall von Bits und damit zur Verfälschung des Nachrichteninhalts führen können.
In bekannten Übertragungsstrecken dieser Art wie z. B. Lichtwellenleiter-Bussystemen werden daher außer Verstärkern zum Ausgleichen der Pegeldämpfüng auch sog. Retimer zur Kompensation der genannten Bitdauerverzerrungen eingesetzt. Häufig werden beide Maßnahmen zugleich in sog. Repeatern vorgenommen.

Bekannte Retimer weisen einen quarzgesteuerten Empfänger zur Analyse des digitalen Eingangssignals (zumeist durch Überabtastung) und einen ebenfalls quarzgesteuerten Sender auf, der ein neues Signal generiert und weitersendet, bei dem die Bitdauer derjenigen des Originalsignals entspricht.
Aufgrund der praktisch unvermeidbaren Toleranzen des Quarzes, der die Datenrate des Originalsignals bestimmt und der Quarze bzw. des Quarzes im Retimer besteht ein Frequenzunterschied zwischen den beteiligten Zeitbasen. Zum Ausgleich dieses Unterschieds ist zwischen den beiden Geräten ein Speicher (RAM) vorgesehen, der vom Digitalsignal durchlaufen wird und eine Speicherzeit von mindestens einer Bitdauer aufweist. Bei Übertragungssystemen mit mehreren solchen Retimern - im praktischen Fall können das z. B. zwanzig sein - addieren sich deren Speicherzeiten und verzögern die Digitalsignale so stark, daß, wenn untragbare Signalverfälschungen vermieden werden sollen, lediglich verhältnismäßig geringe Baudraten übertragen werden können. Diese Retimer sind somit nicht für schnelle Signalübertragungssysteme geeignet, wie sie weltweit in immer stärkerem Maße angestrebt werden (Time-out-Problem).

Darüber hinaus müssen diese Geräte auf eine bestimmte Datenrate und Telegrammart (z. B. PROFIBUS-Telegramme mit einer Datenrate von 12 Mbd) besonders eingestellt werden und sind daher aufwendig und teuer.

Ein Retimer gemäß dem Oberbegriff des Anspruchs 1 ist aus der DE 38 16 973 A1 bekannt. Bei diesen Geräten zur Korrektur von Abweichungen der Impulsbreiten vom Sollwert wird mittels einer Tastverhältnis-Detektorschaltung das Tastverhältnis des Eingangssignals bestimmt und das Regelsignal erzeugt. Im als Und-Schaltung ausgebildeten Stellglied werden Regel- und Eingangssignal addiert und dabei die unerwünschte Impulsbreitenabweichung kompensiert. Das Stellglied weist eine Längskapazität und die Tastverhältnis-Detektorschaltung zwei Tiefpässe auf, so dass dieser bekannte Retimer lediglich für gleichspannungsfreie Digitalsignale, nicht aber für die Restaurierung von Digitalsignalen mit Gleichspannungsanteil wie etwa den verbreitet verwendeten PROFIBUS-Signalen geeignet ist und damit die beschriebene Signalkorrektur nur in einem eingeschränkten Einsatzbereich ermöglicht.

Der Erfindung liegt daher die Aufgabe zugrunde, ein Verfahren und einen Retimer zur Durchführung dieses Verfahrens zu schaffen, bei denen auf möglichst einfache und kostengünstige Weise die Bitdauer der beiden logischen Zustände des Ausgangssignals ohne nennenswerten Zeitverlust im Retimer gleich groß sind und keine Einstellung des Retimers auf eine bestimmte Datenrate und/oder Telegrammart erforderlich ist, und die insbesondere für die zeitliche Restaurierung beliebig codierter Digitalsignale geeignet sind.

Diese Aufgabe ist durch die kennzeichnenden Merkmale der Patentansprüche 1 und 9 gelöst.
Bei dem erfindungsgemäßen Retimer wird das übertragene Digitalsignal auf festgelegte High- und Low-Bitfolgen - wegen des geringsten Aufwands am günstigsten auf einzelne High- und Low-Zustände - untersucht, deren jeweilige Zeitdauer, beispielsweise in Form von hierzu proportionalen Spannungswerten, bestimmt und in einer nachfolgenden Regelschaltung miteinander verglichen. Dieser Vergleich ist nur möglich, wenn die im Digitalsignal nacheinander übertragenen Bits bzw. Bitfolgen gleichzeitig zur Verfügung stehen; sie werden daher in Zwischenspeichern bereitgehalten. Die Regelschaltung erzeugt auf der Basis der beiden Eingangsspannungen ein den Flankentrimmer steuerndes Regelsignal.

Den Bitdauererfassungsschaltungen kann alternativ entweder das Ausgangs- oder das Eingangssignal des Stellglieds zugeführt werden. Im ersten Fall besteht die Kompensationseinrichtung des Retimers aus einer geschlossenen Regelschleife ("Feed-back-Regelung") bei der zweiten Alternative aus einer sog. Feed-forward-Regelung ohne Rückmeldung.

Bei hinsichtlich der Bitdauern unverfälschtem, also dem Originalsignal entsprechendem Eingangssignal ist die Zeitdauer der beiden zu vergleichenden einzelnen Bits oder Bitfolgen gleich groß. Die Größe der Regelspannung hat dabei einen Wert, bei dem das Stellglied keine Signalkorrekturen bewirkt.
Bei zeitverzerrtem digitalen Eingangssignal mit z. B. verlängerter Zeitdauer der High-Bits bzw. -Bitfolgen und entsprechend verkürzter Zeitdauer der Low-Bits bzw. -Bitfolgen weist dagegen das Regelsignal einen Spannungswert auf, bei dem das Stellglied die Zeitablage gerade kompensiert, so daß die Zeitdauer der Bits bzw. Bitfolgen der beiden logischen Zustände wie beim Originalsignal gleich groß ist.

Im Gegensatz zum Stand der Technik erfolgt bei dem nach dem erfindungsgemäßen Verfahren arbeitenden Retimer keine Zwischenspeicherung von Signalbits im Signalzweig mit der damit verbundenen erheblichen Zeitverzögerung. Zwar bedingt auch das Stellglied eine bestimmte Durchlaufzeit, die jedoch sehr viel geringer ist als die genannte Verzögerung.
Damit erfährt das Digitalsignal beim Durchlauf durch den Retimer gemäß der Erfindung praktisch ohne Mehraufwand einen wesentlich geringeren Zeitverlust, so daß auch ein ausgedehntes faseroptisches Übertragungssystem mit einer großen Anzahl solcher Retimer eine schnelle Signalübertragung gewährleistet.
Darüber hinaus ist, da nur die Übergänge der logischen Zustände korrigiert werden, keine Kenntnis und damit auch keine Einstellung der Abstände zwischen diesen Übergängen, also der Datenrate, erforderlich. Auch die bei dem bekannten Retimer nötige Einstellung eines bestimmten Signaltelegramms ist bei dem erfindungsgemäßen Korrekturverfahren irrelevant, wodurch in vorteilhalfter Weise der Aufwand insgesamt weiter reduziert ist.
Schließlich ist das erfindungsgemäße Verfahren im Gegensatz zu dem aus der DE 38 16 973 A1 bekannten Retimer auch für die Kompensation von Bitdauerabweichungen beliebig codierter Digitalsignale geeignet und damit einem wesentlich größeren Einsatzbereich zugänglich.

In den Unteransprüchen sind vorteilhafte Alternativen und Weiterbildungen des Verfahrens gemäß Patentanspruch 1 sowie Ausgestaltungen bzw. Ausführungen des Retimers gemäß Patentanspruch 9 angegeben.
So ist ein Verfahren nach Anspruch 2, bei dem die Verfahrensschritte durch analoge Schaltungen realisiert sind, in wirtschaftlicher Hinsicht besonders für kleinere und mittlere Stückzahlen geeignet.

Bei großen Stückzahlen ist es dagegen günstiger, entsprechend Anspruch 3 für die Verfahrensschritte Digitalschaltungen zu wählen, weil diese in der Massenproduktion äußerst kostengünstig als integrierte Schaltungen herstellbar sind. Da diese IC-Bausteine im Vergleich zu Schaltungen mit diskreten Bauelementen außerdem sehr klein sind, können damit auch Retimer mit geringen Abmessungen und entsprechend breitem Anwendungsbereich aufgebaut werden.
Selbstverständlich ist es auch möglich, nur einzelne Verfahrensschritte zeitdiskret durchzuführen und mittels integrierter Schaltungsbausteine zu realisieren. In den meisten Fällen wird es jedoch aus wirtschaftlichen Gründen zweckmäßig sein, sämtliche relevanten Verfahrensschritte in einem einzigen IC-Baustein durchzuführen.
Häufig sind in Signalübertragungssystemen bereits Prozessoren vorhanden, die für Retimerfunktionen mitbenutzt werden können, um damit die Kosten weiter zu senken.

Eine unkomplizierte, sicher und exakt funktionierende Ausführung des erfindungsgemäßen Verfahrens besteht nach Anspruch 4 darin, daß die Startzeitpunkte für den Anstieg und Abfall der Bitfolgen im Ausgangssignal durch die Zeitpunkte bestimmt werden, an denen die Flanken der Bitfolgen des Eingangssignals einen bestimmten Pegel, nachfolgend Entscheidungswert genannt, aufweisen.

Für die praktische Realisierung dieses Verfahrens stehen mehrere in den Ansprüchen 6 bis 8 angeführte alternative Möglichkeiten zur Verfügung. Besonders genau und mit geringen Toleranzen funktionieren diese Verfahren, wenn die Einstellung nicht an den normalerweise sehr steilen Bitflanken vorzunehmen ist, sondern an Flanken mit geringerer Steigung. Es ist deshalb besonders vorteilhaft, die Anstiegs- und Abfallzeit der Bitfolgeflanken des Eingangssignals gemäß Patentanspruch 5 mittels eines Verzögerungsgliedes zu vergrößern.

Bei allen drei Methoden zur Bestimmung der Startzeitpunkte für den Anstieg bzw. den Abfall der Bits bzw. Bitfolgen, also für die Wechsel von Low nach High und umgekehrt, kann im übrigen sowohl der Entscheidungswert als auch die Flankensteilheit für die beiden Flanken gleich oder verschieden groß sein, so daß insgesamt eine Vielzahl von Einstellmöglichkeiten gegeben ist, mit der eine optimale Anpassung an die Bedingungen aller praktischen Einzelfälle erzielt werden kann.

Bei einer vorteilhaften Ausführung des in Anspruch 9 angegebenen Retimers weist der Flankentrimmer gemäß Anspruch 10 einen Komparator auf, dessen erster Eingang über ein Verzögerungsglied mit dem Ausgang des O/E-Wandlers und dessen zweiter Eingang mit dem Ausgang der Regelschaltung verbunden ist. Das Verzögerungsglied am Eingang des Flankentrimmers, das bei einer besonders einfachen Ausbildung lediglich in einem RC-Glied besteht (Patentanspruch 11), bewirkt die bereits beschriebene Vergrößerung der Anstiegs- und Abfallzeitdauer der Bit- bzw. Bitfolgeflanken. Im Komparator erfolgt nun - auf eine der in den Ansprüchen 6 bis 8 angegebenen Arten - eine gegenläufige Verschiebung des Startzeitpunkts der beiden Flanken der Einzelbits bzw. der Bitfolge des Eingangssignals, um deren Dauer derjenigen des Originalsignals anzugleichen. Wenn also beispielsweise die High-Bits bzw. -Bitfolgen des Eingangssignals gegenüber der Solldauer zeitlich verlängert und die Low-Bits bzw. - Bitfolgen entsprechend verkürzt sind, so kann das Regelsignal den Pegel des Entscheidungswerts anheben, wobei durch den gegenläufigen Verlauf der Flanken der zeitliche Abstand der diesem Pegel entsprechenden Flankenpunkte und damit der Abstand der Startzeitpunkte für die Flanken der Bits bzw. der Bitfolgen des Ausganssignals so verringert werden, daß deren Zeitdauer dem Sollwert entspricht. Durch diese Korrektur ist dann auch die Zeitdauer gleicher Bits bzw. Bitfolgen beider logischer Zustände wieder gleich.

Eine digitale Ausführung gemäß Anspruch 12 hat nicht nur den bereits angeführten Vorteil einer bei großen Stückzahl kostengünstigen Integration. sondern auch den, daß der gesamte Flankentrimmer ausschließlich aus Verzögerungsgliedern aufgebaut sein kann und kein Komparator erforderlich ist.

Die Verwendung von Verzögerungsschaltungen sowie des am Eingang der Bitdauererfassungsschaltungen erforderlichen RC-Glieds mit gemäß Anspruch 13 einstellbarer Zeitkonstante ermöglicht in vorteilhafter Weise eine Anpassung an unterschiedliche Datenraten verschiedener Digitalsignale (z. B. 1,5 oder 12 MBit/s bei PROFIBUS-Signalen) und erweitert damit das Anwendungsgebiet des Retimers wesentlich.

Besonders einfache und kostengünstige Ausbildungen der Istwertspeicher und der Regelschaltung bei analogem Verfahren sind in den Ansprüchen 14 und 15 angegeben. Wie bereits ausgeführt sind aber bei hohen Stückzahlen diese Funktionen noch billiger durch integrierte Schaltungen zu realisieren.
Dies gilt selbstverständlich auch für die Bitdauererfassungsschaltungen, wobei die Ermittlung der Zeitdauer der Bits bzw. Bitfolgen z. B. durch digitale Zähler erfolgt, deren Taktfrequenz größer ist als die Datenrate der Bits bzw. Bitfolgen.

Wenn die Codierung des Digitalsignals bekannt ist, sind die Bitdauererfassungsschaltungen besonders einfach und kostengünstig ausführbar. So können etwa bei gleichspannungsfrei codierten Digitalsignalen wie beim sog. Manchestercode beide Bitdauererfassungsschaltungen durch ein einziges RC-Glied mit entsprechend langer Zeitkonstante realisiert werden.

Die Erfindung ist nachstehend noch anhand eines Ausführungsbeispiels in den Figuren näher erläutert. Es zeigen:
- Fig. 1 -: ein Prinzipschaltbild eines analog arbeitenden, in einem faseroptischen Bussystem eingeschalteten Retimers.
- Fig. 2a -: den Signalverlauf eines unverfälschten (Original-) Digitalsignals
- Fig. 2b -: jeweils den Signalverlauf
- eines verfälschten Eingangssignals mit verlängerten High-Bit,
- des gleichen Signals mit symmetrisch zeitverzögerten Flanken,
- des korrigierten Ausgangssignals und
- Fig. 2c -: die Signalverläufe wie in Fig. 2b. jedoch mit unsymmetrisch zeitverzögerten Flanken des verfälschten Eingangssignals.

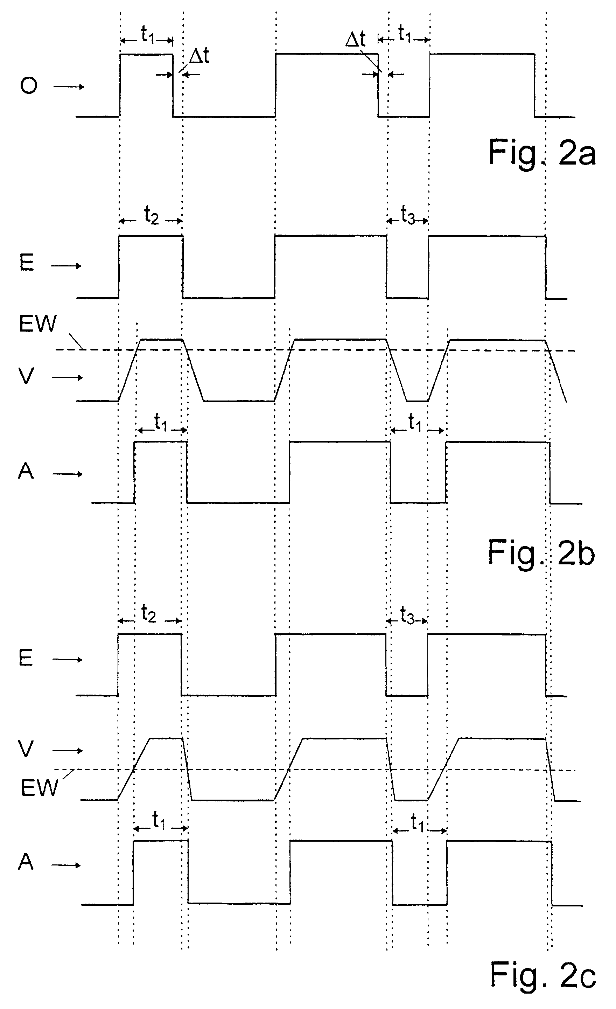

Bei allen Signaldarstellungen in den Fig. 2a bis 2c ist der zeitliche Verlauf in horizontaler Richtung und der Pegelverlauf in vertikaler Richtung angegeben.

Der Retimer 1 besteht aus einem ein digitales elektrisches Eingangssignal E liefernden O/E-Wandler 2, einem damit über einen Signalzweig 3 verbundenen ausgangsseitigen E/O-Wandler 4, einem zwischen den beiden Wandlern 2, 4 in den Signalzweig 3 eingeschalteten, das korrigierte digitale Ausgangssignal A erzeugenden Flankentrimmer 5, je eine vom Ausgangssignal A angesteuerte Bitdauererfassungsschaltung 6, 7 für die beiden logischen Zustände, je einem zwischen den Ausgängen der Bitdauererfassungsschaltungen 6, 7 und Masse eingeschalteten, als Zwischenspeicher dienenden Kondensator 8, 9 sowie einem Differenzverstärker 10, dessen beide Eingänge ebenfalls mit den Ausgängen der Bitdauererfassungsschaltungen 6, 7 verbunden sind und dessen Ausgangssignal als Regelsignal den Flankentrimmer 5 ansteuert.
Letzterer besteht aus einem eingangsseitigen RC-Verzögerungsglied 11 sowie einem Komparator 12.

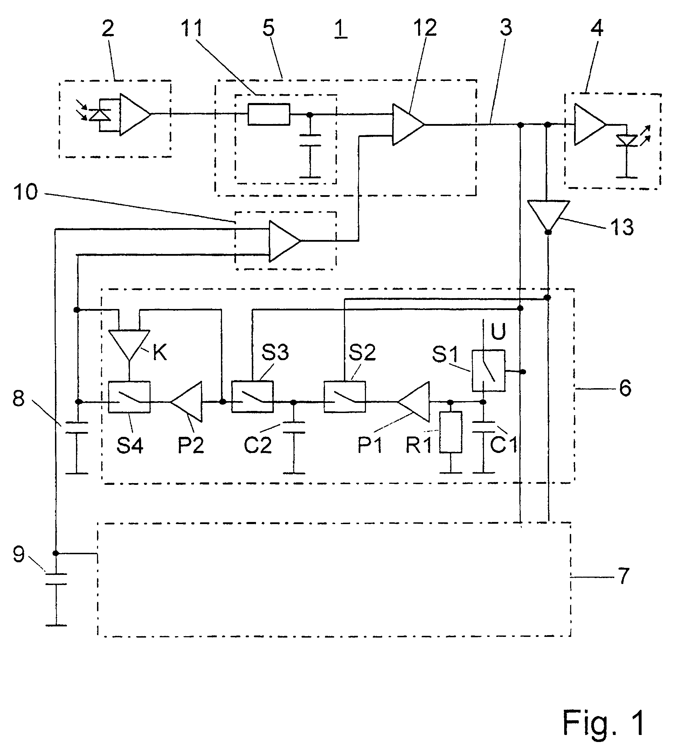

In Fig. 1 ist aus Gründen einer übersichtlicheren Darstellung nur eine der beiden identisch aufgebauten Bitdauererfassungsschaltungen 6 mit Schaltungsbauelementen dargestellt. Sie weist eingangsseitig einen ersten Schalter S 1 auf, an dessen einem Anschluß eine Spannung U anliegt und dessen zweiter Anschluß einerseits über ein RC-Glied R1, C1 mit Masse und andererseits über einen Pufferverstärker P1 mit dem ersten Anschluß eines zweiten Schalters S2 verbunden ist. Dessen zweiter Anschluß liegt über einem weiteren Kondensator C2 an Masse und ist zugleich mit dem ersten Anschluß eines dritten Schalters verbunden, dessen zweiter Anschluß einerseits zum ersten Eingang eines Komparators K und zum anderen über einen weiteren Pufferverstärker P2 zum ersten Anschluß eines vierten Schalters S4 führt, der vom Ausgangssignal des Komparators K gesteuert wird. Die Schalter S1 bis S3 werden wechselseitig vom Ausgangssignal bzw. - über einen Inverter 13 - vom invertierten Ausgangssignal gesteuert. Der zweite Anschluß des vierten Schalters S4 und der zweite Eingang des Komparators K bilden den Ausgang der Bitdauererfassungsschaltung 6.

Bitdauererfassungsschaltungen 6, 7, Zwischenspeicher 8, 9, Differenzverstärker 10 und Flankentrimmer 5 bilden eine geschlossene Regelschleife (Feed-back-Regelung) zur Korrektur verfälschter Zeitdauern der Bits bzw. Bitfolgen des digitalen Eingangssignals E.

Im Originalsignal O haben alle High- und Low-Bits die gleiche Dauer t₁.
Im Eingangssignal E sind beim vorliegenden Beispiel gegenüber dem Originalsignal O alle Übergänge vom High nach Low - verglichen mit den Übergängen von Low nach High - um die Zeitdauer Δt verspätet und dementsprechend ist die Dauer t₂ aller einzelnen High-Bits um Δt (t₂= t₁ + Δt) zu lang und die Dauer t₃ aller einzelnen Low-Bits um die gleiche Zeitdauer (t₃ = t₁ - Δt) zu kurz.

Der Flankentrimmer 5 verzögert nun mit Hilfe der Regelschaltung die Übergänge von Low nach High, bezogen auf die Übergänge von High nach Low, ebenfalls um die Zeitdauer Δt, so daß das korrigierte Ausgangssignal A wieder dem Originalsignal O entspricht. Dies wird auf folgende Weise erreicht:

Das vor dem Einsetzen der Regelung noch dem verfälschten Eingangssignal E entsprechende Ausgangssignal A wird aus dem Signalzweig 3 abgezweigt und den beiden Bitdauererfassungsschaltungen 6, 7 zugeführt. Während des High-Zustandes des Ausgangssignals A ist der Schalter S1 geschlossen, der Kondensator C1 wird auf die Spannung U geladen. Während des folgenden Low-Zustands entlädt sich C1 über R1. Dessen Spannungswert wird über den Pufferverstärker P1 und den während dieses Zeitraums geschlossenen Schalter S2 auf den Kondensator C2 übertragen.
Am Ende dieses Low-Zustandes mit Beginn des nächsten High-Zustands öffnet der Schalter S2 und schließt der Schalter S1. Der Kondensator C1 nimmt jetzt wieder seine Startspannung U an, auf dem Kondensator C2 bleibt die erreichte Entladespannung des Kondensators C1 zwischengespeichert. Diese Spannung gelangt über den nun geschlossenen Schalter S3 zum Pufferverstärker P2 und zum Komparator K.
Im vorliegenden Ausführungsbeispiel sucht nun die Bitdauererfassungsschaltung den kürzesten, das heißt 1 Bit langen Low-Zustand im Signal, welcher der höchsten am Kondensator C2 auftretenden Spannung entspricht. Dazu vergleicht der Komparator K die aktuell im Kondensator C2 gespeicherte Spannung mit der im Istwertspeicher 8 abgelegten Spannung.
Ist die aktuell erfaßte Spannung am Kondensator C2 höher als die im Istwertspeicher abgelegte Spannung, dann bewirkt der Komparator K das Schließen des Schalters S4 und die am Kondensator C2 liegende Spannung wird auf den als Kondensator ausgebildeten Istwertspeicher 8 übertragen.

Ist die aktuell erfaßte Spannung am Kondensator C2 dagegen niedriger als die bereits im Istwertspeicher 8 abgelegte, so bleibt der Schalter S4 geöffnet und die im Istwertspeicher 8 gespeicherte Spannung unverändert.

Aus den an seinen Eingängen anliegenden Istwerten der als Spannungswerte zwischengespeicherten High- und Low-Bitdauern erzeugt nun der Differenzverstärker 10 ein dem einen Eingang des Komparators 12 des Flankentrimmers 5 zugeführtes Regelsignal, dessen Gleichspannungspegel als Entscheidungswert EW zusammen mit dem Verlauf der Bitflanken die Startzeitpunkte für die Übergänge von Low nach High und von High nach Low bestimmen, wie dies in den Figuren 2b und 2c gezeigt ist.

Die Anstiegs- und Abfallzeitdauern der Bitflanken des Eingangssignals E sind wesentlich kürzer als die Bitdauer und damit zu kurz, um eine effektive und sichere Korrektur der genannten Art, d. h. ausreichend große Änderungen der Zeitdauern zu ermöglichen. Der Flankentrimmer 5 weist daher an seinem Eingang ein Verzögerungsglied 11 auf, welches diese Flanken entsprechend flacher macht. Das so veränderte, hier vereinfacht trapezförmig dargestellte Eingangssignal ist mit V bezeichnet.

Der Komparator 12 des Flankentrimmers 5 gibt an seinem Ausgang im Durchlaufzeitpunkt der ansteigenden bzw. abfallenden Flanke durch den Entscheidungswert EW ein High bzw. Low ab, wodurch sich das Ausgangssignal A ergibt.
Im vorliegenden Beispiel sind die Flanken des Signals V fest und der Entscheidungswert EW wird durch den Pegel des Regelsignals so eingestellt, daß die Zeitdauer der einzelnen Bits gleich groß wird und damit das dem E/O-Wandler 4 zugeführte Ausgangssignal A dem Originalsignal O entspricht.
Die genannte Regelung ist besonders wirksam, weil aufgrund der gegenläufigen Flankensteigungen des Signals V bereits mit geringen Pegeländerungen große Veränderungen der Zeitdauer der Bits erzielbar sind.

Bei dem in Fig. 2b dargestellten Signal V sind die Bitflanken symmetrisch, d. h. der Betrag der Steigungen ist jeweils gleich groß. Bei dieser Ausführung bleiben die Flanken unverändert und der Entscheidungswert EW wird durch das Regelsignal soweit oberhalb des mittleren Bitpegels eingestellt, daß der zeitliche Flankenabstand bei diesem Pegel gerade der Soll-Bitdauer t₁ entspricht (s. Anspruch 6).

Bei dem alternativen Ausführungsbeispiel gemäß Fig. 2c ist dagegen der Entscheidungswert EW in Höhe des halben Bitpegels festgelegt und der gewünschte Flankenabstand bei diesem Entscheidungswert EW wird hier durch eine mittels des Regelsignals eingestellte Vergrößerung der Steilheit der abfallenden Bitflanke erzielt. Die beiden Bitflanken sind in diesem Fall also unsymmetrisch (s. Anspruch 7).

## Patentansprüche

1. Verfahren zur Beseitigung von gegenüber dem Sollverlauf abweichenden Zeitdauern logischer Zustände von faseroptisch übertragenen Digitalsignalen mittels wenigstens eines im Übertragungsweg eingeschalteten, einen opto-elektrischen (O/E-) und einen elektro-optischen (E/O-) Wandler sowie ein dazwischengeschaltetes, von einem Regelsignal gesteuertes Stellglied aufweisenden Retimers, **dadurch gekennzeichnet, daß** die Zeitdauer einer jeweils gleichen Anzahl aufeinanderfolgender Bits gleicher Polarität (Bitfolge) der beiden logischen Zustände High und Low des aus dem die beiden Wandler verbindenden Signalzweig abgezweigten Digitalsignals kontinuierlich gemessen, zwischengespeichert sowie miteinander verglichen wird und daß aus dem Unterschied dieser Zeitdauern (Zeitablage) das Regelsignal erzeugt wird, welches das vom O/E-Wandler gelieferte Eingangssignal derart über das Stellglied beeinflußt, daß die Zeitablage durch zeitliches Verschieben wenigstens einer Bitfolgeflanke kompensiert wird und die High- und Low-Bitfolgen des dem E/O-Wandler zugeführten Ausgangssignals gleich groß sind.

2. Verfahren nach Anspruch 1, **dadurch gekennzeichnet, daß** die Verfahrensschritte zeitkontinuierlich erfolgen.

3. Verfahren nach Anspruch 1, **dadurch gekennzeichnet, daß** die Verfahrensschritte zeitdiskret erfolgen.

4. Verfahren nach einem der Ansprüche 1 bis 3, **dadurch gekennzeichnet, daß** die Startzeitpunkte für den Anstieg und Abfall der Bitfolgen im Ausgangssignal durch die Zeitpunkte bestimmt werden, an denen die Flanken der Bitfolgen des Eingangssignals einen bestimmten Pegel (Entscheidungswert) aufweisen.

5. Verfahren nach Anspruch 4, **dadurch gekennzeichnet, daß** die Anstiegs- bzw. Abfallzeitdauer der Bitfolgeflanken des Eingangssignals vor der Flankenverschiebung vergrößert wird.

6. Verfahren nach Anspruch 4 oder 5, **dadurch gekennzeichnet, daß** die Steilheit der Bitfolgeflanken konstant gehalten und der Entscheidungswert vom Regelsignal eingestellt wird.

7. Verfahren nach Anspruch 4 oder 5, **dadurch gekennzeichnet, daß** der Entscheidungswert konstant gehalten und die Steilheit wenigstens einer Bitfolgeflanke vom Regelsignal eingestellt wird.

8. Verfahren nach Anspruch 4 oder 5, **dadurch gekennzeichnet, daß** sowohl der Entscheidungswert als auch die Steilheit der Bitfolgeflanken vom Regelsignal eingestellt werden.

9. Retimer mit einem Stellglied, welches von einem Regelsignal gesteuert wird, zur Durchführung des Verfahrens nach einem der Ansprüche 1 bis 8 in faseroptischen Signalübertragungssystemen, **dadurch gekennzeichnet, daß** das Stellglied ein Flankentrimmer (5) ist, dessen Eingangssignal (E) oder Ausgangssignal (A) je einer Bitdauererfassungsschaltung (6, 7) für die Bitfolge der beiden logischen Zustände zugeführt ist, deren Ausgänge jeweils mit einem Istwertspeicher (8, 9) für die erfaßte, zur Zeitdauer der Bitfolge proportionale Spannung sowie einem Eingang einer Regelschaltung (10) verbunden sind, deren ausgangsseitiges Regelsignal den Flankentrimmer (5) derart steuert, daß die Dauer der verglichenen Bitfolgen beider logischer Zustände im korrigierten Ausgangssignal (A) gleich groß ist.

10. Retimer nach Anspruch 9, **dadurch gekennzeichnet, daß** der Flankentrimmer (5) einen Komparator (12) aufweist, dessen erster Eingang über ein Verzögerungsglied (11) mit dem Ausgang des O/E-Wandlers (2) und dessen zweiter Eingang mit dem Ausgang der Regelschaltung (10) verbunden ist.

11. Retimer nach Anspruch 10. **dadurch gekennzeichnet, daß** das Verzögerungsglied ein RC-Glied (11) ist.

12. Retimer nach Anspruch 9. **dadurch gekennzeichnet, daß** der Flankentrimmer aus digitalen Verzögerungsgliedern besteht.

13. Retimer nach einem der Ansprüche 10 bis 12, **dadurch gekennzeichnet, daß** die Zeitkonstante der Verzögerungsschaltung (11) des Flankentrimmers (5) sowie eines RC-Glieds (R1, C1) am Eingang der Bitdauererfassungsschaltungen (6, 7) einstellbar sind.

14. Retimer nach einem der Ansprüche 9 bis 12, **dadurch gekennzeichnet, daß** als Istwertspeicher jeweils ein zwischen dem Ausgang der Bitdauererfassungsschattungen (6, 7) und Masse eingeschalteter Kondensator (8, 9) vorgesehen ist.

15. Retimer nach einem der Ansprüche 9 bis 13, **dadurch gekennzeichnet, daß** die Regelschaltung aus einem Differenzverstärker (10) besteht.

## Claims

1. Method of eliminating durations of logic states of fibre-optically transmitted digital signals which deviate from the desired progression by means of at least one re-timer which is connected in the transmission path and comprises an opto-electrical and an electro-optical transducer and an intermediately connected actuator which is controlled by a control signal, **characterised in that** the duration of a respectively identical number of consecutive bits having the same polarity (bit sequence) of the two logic states High and Low of the digital signal which is branched from the signal branch connecting the two transducers is measured in a continuous manner, is buffered and compared each with the other and that the difference in these durations (time-offset) is used for generating the control signal which influences the input signal, which is provided by the opto-electrical transducer, by way of the actuator in such a manner that the time-offset is compensated by the temporal shift of at least one bit sequence edge and the High and Low bit sequences of the output signal supplied to the electro-optical transducer are the stame length.

2. Method according to claim 1, **characterised in that** the method steps are performed in a time-continuous manner.

3. Method according to claim 1, **characterised in that** the method steps are performed in a time-discrete manner.

4. Method according to any one of claims 1 to 3, **characterised in that** the starting times for the rise and fall of the bit sequences in the output signal are determined by the points in time, at which the edges of the bit sequences of the input signal are at a specific level (decision value).

5. Method according to claim 4, **characterised in that** the rise and fall duration of the bit sequence edges of the input signal is increased prior to the edge shift.

6. Method according to claim 4 or 5, **characterised in that** the steepness of the bit sequence edges is kept constant and the decision value is adjusted by the control signal.

7. Method according to claim 4 or 5, **characterised in that** the decision value is kept constant and the steepness of at least one bit sequence edge is adjusted by the control signal.

8. Method according to claim 4 or 5, **characterised in that** both the decision value and also the steepness of the bit sequence edges are adjusted by the control signal.

9. Re-timer having an actuator, which is controlled by a control signal, for the purpose of implementing the method according to any one of claims 1 to 8 in fibreoptic signal transmission systems, **characterised in that** the actuator is an edge trimmer (5), whose input signal (E) or output signal (A) is supplied in each case to a bit duration detection circuit (6, 7) for the bit sequence of the two logic states, whose outputs are connected in each case to an actual value memory (8, 9) for the detected voltage, which is proportional to the duration of the bit sequence, and to an input of a control circuit (10), whose output-side control signal controls the edge trimmer (5) in such a manner that the duration of the compared bit sequences of the two logic states is the same length in the corrected output signal (A).

10. Re-timer according to claim 9, **characterised in that** the edge trimmer (5) comprises a comparator (12), whose first input is connected via a delay element (11) to the output of the opto-electrical transducer (2) and whose second input is connected to the output of the control circuit (10).

11. Re-timer according to claim 10, **characterised in that** the delay element is an RC-element (11).

12. Re-timer according to claim 9, **characterised in that** the edge trimmer consists of digital delay elements.

13. Re-timer according to any one of claims 10 to 12, **characterised in that** the time constant of the delay circuit (11) of the edge trimmer (5) and of an RC-element (R1, C1) can be adjusted at the input of the bit duration detection circuits (6, 7).

14. Re-timer according to any one of claims 9 to 12, **characterised in that** the actual value memory is provided in each case in the form of a capacitor (8, 9) which is connected between the output of the bit duration circuits (6, 7) and earth.

15. Re-timer according to any one of claims 9 to 13, **characterised in that** the control circuit consists of a difference amplifier (10).

## Revendications

1. Procédé pour éliminer des durées d'états logiques, s'écartant de l'allure de consigne, de signaux numériques transmis par des fibres optiques, au moyen d'au moins un convertisseur optoélectrique (O/E) et d'un convertisseur électro-optique (E/O) montés dans le parcours de transmission, ainsi que d'un retimer monté entre eux et comportant un organe de réglage commandé par un signal de régulation, **caractérisé en ce que** les durées d'un même nombre de bits de même polarité se succédant (séquence de bits) des deux états logiques haut et bas du signal numérique dérivé de la branche de signaux reliant les deux convertisseurs, sont mesurées en continu, mémorisées de façon temporaire et comparées entre elles, et **en ce qu'**à partir de la différence de ces durées (décalage dans le temps), on produit le signal de régulation qui intervient, par l'intermédiaire de l'organe de réglage, sur le signal d'entrée fourni par le convertisseur (O/E), de manière que le décalage dans le temps soit compensé par un déplacement temporel d'au moins un flanc de la séquence des bits et que les séquences des bits haut et bas du signal de sortie envoyé au convertisseur (E/O) soient de même grandeur.

2. Procédé selon la revendication 1, **caractérisé en ce que** les étapes du procédé se déroulent en continu dans le temps.

3. Procédé selon la revendication 1, **caractérisé en ce que** les étapes du procédé se déroulent de manière discrète dans le temps.

4. Procédé selon l'une des revendications 1 à 3, **caractérisé en ce que** les instants d'initialisation de la montée et de la descente des séquences de bits dans le signal de sortie sont déterminés par les instants auxquels les flancs des séquences de bits du signal d'entrée présentent un niveau déterminé (valeur de décision).

5. Procédé selon la revendication 4, **caractérisé en ce que** la durée de montée ou de descente des flancs des séquences de bits du signal d'entrée est augmentée avant le déplacement des flancs.

6. Procédé selon la revendication 4 ou 5, **caractérisé en ce que** la pente des flancs des séquences de bits est maintenue constante et la valeur de décision est réglée par le signal de régulation.

7. Procédé selon la revendication 4 ou 5, **caractérisé en ce que** la valeur de décision est maintenue constante et la pente d'au moins un flanc de la séquence de bits est réglée par le signal de régulation.

8. Procédé selon la revendication 4 ou 5, **caractérisé en ce que** la valeur de décision de même que la pente des flancs des séquences de bits sont réglées par le signal de régulation.

9. Retimer comportant un organe de réglage qui est commandé par un signal de régulation, pour la mise en oeuvre du procédé selon l'une des revendications 1 à 8 dans des systèmes de transmission de signaux par fibres optiques, **caractérisé en ce que** l'organe de réglage est un trimmer de flanc (5) dont le signal d'entrée (E) ou le signal de sortie (A) est envoyé à un circuit (6, 7) de détection de la durée des bits pour la séquence de bits des deux états logiques, dont les sorties sont reliées chacune à une mémoire de valeurs réelles (8, 9) pour la tension détectée, proportionnelle à la durée de la séquence de bits, ainsi qu'à une entrée d'un circuit de régulation (10) dont le signal de régulation côté sortie commande le trimmer de flanc (5) de manière que la durée des séquences de bits comparées des deux états logiques soit égale dans le signal de sortie (A) corrigé.

10. Retimer selon la revendication 9, **caractérisé en ce que** le trimmer de flanc (5) comporte un comparateur (12) dont la première entrée est reliée, par un organe de temporisation (11), à la sortie du convertisseur O/E (2) et dont la deuxième entrée est reliée à la sortie du circuit de régulation (10).

11. Retimer selon la revendication 10, **caractérisé en ce que** l'organe de temporisation est un organe RC (11).

12. Retimer selon la revendication 9, **caractérisé en ce que** le trimmer de flanc est constitué d'organes numériques de temporisation.

13. Retimer selon l'une des revendications 10 à 12, **caractérisé en ce que** la constante de temps du circuit de temporisation (11) du trimmer de flanc (5) ainsi que celle d'un organe RC (R1, C1) sont réglables à l'entrée des circuits (6, 7) de détection de la durée des bits.

14. Retimer selon l'une des revendications 9 à 12, **caractérisé en ce qu'**il est prévu comme mémoire de valeurs réelles un condensateur (8, 9) monté entre la sortie des circuits (6, 7) de détection de la durée des bits et la masse.

15. Retimer selon l'une des revendications 9 à 13, **caractérisé en ce que** le circuit de régulation est constitué d'un amplificateur différentiel (10).
